# FASCICULE DE BREVET EUROPEEN

(11) **EP 0 368 123 B1**
(45) Date de publication et mention de la délivrance du brevet: **01.09.1993**
(21) Numéro de dépôt: 89120180.8
(22) Date de dépôt: 31.10.1989
(51) Int. Cl.: H04J 3/06, H04L 7/00, H04Q 11/04

(54) **Agencement de synchronisation pour autocommutateur numérique privé raccordé à un réseau RNIS**
Synchronisationsanordnung für eine an ein ISDN-Netz angeschlossene digitale Nebenstellenanlage
Synchronisation arrangement for a digital PBX linked to an ISDN network

(30) Priorité: 03.11.1988 FR 8814329
(43) Date de publication de la demande: 16.05.1990
(73) Titulaire: ALCATEL BUSINESS SYSTEMS, F-75008 Paris (FR)
(72) Inventeur: Allouis, Jacques, F-67400 Illkirch Graffenstaden (FR); Hauptmann, Patrick, F-67200 Strasbourg (FR); Penet, Xavier, F-67400 Illkirch Graffenstaden (FR); Saint-Ellier, Pierre, F-67100 Strasbourg (FR)
(74) Mandataire: Weinmiller, Jürgen

(56) Documents cités:
- EP-A- 0 228 685
- EP-A- 0 237 247
- SIEMENS TELCOM REPORT, vol. 11, no. 4, juillet/août 1988, pages 140-143, München, DE; H. BEETZ et al.: "ISDN präzise synchronisieren"
- FUJITSU-SCIENTIFIC AND TECHNICAL JOURNAL, vol. 18, no. 3, september 1982, pages 351-380, Kawasaki, JP; E. ODERA et al.: "FETEX-150 digital switching system for central offices"

## Description

L'invention concerne un agencement de synchronisation pour autocommutateur numérique, de type privé, raccordé à un réseau numérique à intégration de services, dit RNIS.

Les caractérisques fondamentales des réseaux RNIS, définis à partir des recommandations du comité consultatif international pour le télégraphe et le téléphone (CCITT), qui sont destinés à remplacer les réseaux téléphoniques antérieurs, sont décrites dans de nombreuses publications par exemple dans l'ouvrage "Le RNIS techniques et atouts" publié en France en 1987 dans la collection technique et scientifique des télécommunications par un collectif s'intitulant G.DICENET.

L'un des objectifs de tels réseaux est de permettre la fourniture de services téléphoniques ou non à l'aide d'un ensemble limité de types de connexion et d'arrangements d'interfaces polyvalentes usager-réseau.

Le raccordement des installations d'usager de type autocommutateur privé à un réseau RNIS est ainsi prévu par l'intermédiaire d'accès, dits de base, référencés TO.

Un accès de base TO est prévu pour être bidirectionnel, deux paires symétriques de fils conducteurs permettant d'assurer chacune une transmission unidirectionnelle avec un débit maximal de cent quatre vingt douze kilobits par seconde.

Deux canaux référencés B de soixante-quatre kilobits par seconde chacun permettent le transport d'informations, sous forme numérique et de manière transparente, un canal référencé D de seize kilobits par seconde permet de transmettre des données en mode paquet pour des services et de la signalisation qui elle aussi est numérisée. Les quarante quatre kilobits par seconde restant sont exploités pour des fonctions de gestion, notamment pour une synchronisation de trame et pour l'activation de l'accès. En effet, lorsque des accès de base sont téléalimentés par le réseau RNIS, il est possible de réduire la consommation en énergie de ce réseau en désactivant les accès de base lorsque ceux-ci sont temporairement inutilisés.

Dans le cas d'une installation d'usager, du type autocommutateur, raccordée à un réseau RNIS par l'intermédiaire d'au moins un accès de base TO, il est prévu une base de temps dans l'installation pour fournir les nécessaires signaux d'horloge et de synchronisation en l'absence de signaux correspondants fournis par le réseau RNIS, étant entendu que ces derniers sont prépondérants dès que des communications transitent par au moins un accès de base To.

La présente invention propose donc un agencement de synchronisation permettant à un autocommutateur numérique privé, raccordé à un réseau RNIS par au moins un accès de base TO, de s'asservir à l'horloge du réseau après toute phase de fonctionnement pendant laquelle cet autocommutateur est synchronisé en interne par une base de temps qui lui est propre.

L'autocommutateur comporte une logique de commande et des interfaces spécialisées par l'intermédiaire desquelles cet autocommutateur se raccorde d'une part à une pluralité de terminaux d'abonné d'autre part à un réseau de télécommunication, du type numérique à intégration de services. Les interfaces spécialisées sont respectivement reliées les unes au réseau par des accès de base au travers desquels transitent des signaux numériques d'information et/ou de signalisation, transmis bidirectionnellement entre l'autocommutateur et le réseau de télécommunication, et des signaux d'horloge transmis du réseau vers l'autocommutateur et les terminaux, les autres aux terminaux par des accès pour terminaux par l'intermédiaire desquels transitent des signaux numériques d'information et/ou de signalisation transmis bidirectionnellement entre l'autocommutateur et les terminaux ainsi que des signaux d'horloge transmis vers les terminaux.

L'autocommutateur comporte de plus une base de temps associant en particulier un oscillateur local à fréquence fixe à une boucle à verrouillage de phase pour être apte à fournir les signaux d'horloge nécessaires à cet autocommutateur et aux terminaux.

Selon une caractéristique de l'invention, l'agencement de synchronisation comporte des moyens de commutation d'horloge aptes à imposer à la boucle de verrouillage de phase de la base de temps d'autocommutateur les premiers signaux d'horloge provenant du réseau par l'intermédiaire d'un accès de base To actif et de l'interface associée, dès mise en phase approchée desdits premiers signaux d'horloge vis-à-vis des signaux d'horloge correspondants fournis par la base de temps en l'absence de ces dits premiers signaux d'horloge et cela pour une durée égale à la persistence de la fourniture de ces premiers signaux d'horloge par l'accès de base et l'interface qui les transmettent.

L'invention, ses caractéristiques et ses avantages sont précisés dans la description qui suit en liaison avec les figures évoquées ci-dessous.

La figure 1 présente un agencement de synchronisation selon l'invention pour autocommutateur privé relié à un réseau RNIS.

La figure 2 présente un sous-ensemble d'acquisition d'horloge pour agencement de synchronisation, selon l'invention.

La figure 3 présente une base de temps pour agencement de synchronisation selon l'invention.

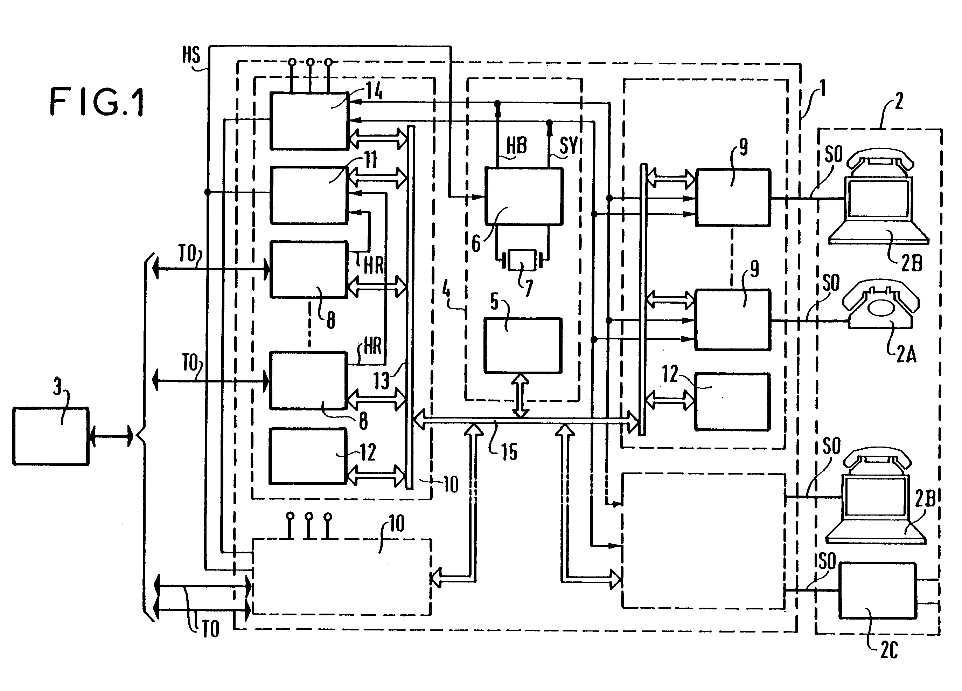

L'agencement de synchronisation montré en figure 1 est destiné à permettre la synchronisation d'un autocommutateur 1, dit privé, desservant un ensemble de terminaux 2 à un réseau RNIS 3, lorsque cet autocommutateur 1 est relié à ce réseau 3 au niveau d'interfaces T, telles que définies par le CCITT, étant de plus relié aux terminaux 2 au niveau d'interface S.

On se rapportera aux ouvrages sur le réseau RNIS et notamment à celui évoqué plus haut pour les caractéristiques de définition et de fonctionnement d'un tel réseau. Il sera seulement rappelé ici que les recommandations du CCITT relatives aux réseaux RNIS prévoient que le raccordement d'un autocommutateur privé à un réseau RNIS est susceptible de s'effectuer par l'intermédiaire d'accès TO dits de base, au niveau d'interface T. Chaque accès de base TO, qui a un débit en ligne de 192 kbit/s, correspond à une liaison de type 2B + D dans laquelle deux canaux B de 64 kbit/s sont réservés pour la transmission de signaux de voix et de données et un canal D de 16 kbit/s est exploitable pour la signalisation et pour la transmission de données à faible débit.

Des signaux d'horloge sont incorporés dans les signaux numériques transmis par le réseau RNIS vers les terminaux 2, via l'autocommutateur 1, ils comprennent une horloge de bit dont la fréquence est de 192 kHz et au moins une horloge de synchronisation de trame. Ces horloges sont susceptibles de n'être transmises par un accès de base To que si cet accès de base est activé, dans la mesure où il est prévu de désactiver les équipements que constituent les terminaisons numériques de ligne du réseau RNIS et les terminaux interconnectés par un accès de base TO, lorsqu'aucune communication ne transite par cet accès de base.

La liaison physique au travers d'un accès de base TO s'effectue par l'intermédiaire de deux paires de fils réservées chacune à un sens de transmission pour les signaux numériques de voix, de données et d'horloges, quatre autres fils étant prévus pour d'autres usages notamment la téléalimentation éventuelle de terminaux de l'ensemble.

Ces terminaux de l'ensemble 2 peuvent être très divers et reliés aux accès SO d'interface S soit directement, soit via des adaptateurs appropriés non représentés ici. A titre d'exemple figurent un poste téléphonique numérique 2A, des terminaux télématiques 2B, associant chacun un poste téléphonique à un terminal informatique, et une terminaison numérique de réseau privé 2C dont les structures ne seront pas développées ici dans la mesure où elles sont sans rapport direct avec l'invention.

Chaque accès SO correspond à une liaison 2B + D telle que définie plus haut et permet de synchroniser au moins un terminal sur les signaux d'horloge transmis à cet effet par l'autocommutateur privé 1. La structure générale d'un autocommutateur numérique privé ne sera pas décrite ici, on se rapportera par exemple au brevet français FR-A-2.503497 de la demanderesse sur ce sujet, seuls les éléments constitutifs nécessaires à la compréhension de l'agencement de synchronisation selon l'invention étant précisés ici.

De même on rappelera que la connexion d'un auto-commutateur numérique privé à un réseau RNIS, ici décrite au niveau de l'interface T est susceptible d'être réalisée au niveau U lorsque les terminaisons numériques des lignes du réseau RNIS du côté usager sont physiquement situées dans l'autocommutateur privé, ceci étant pratiquement sans conséquence en ce qui concerne l'agencement de synchronisation proposé.

Comme indiqué plus haut les terminaux de l'ensemble 2 sont conçus pour se synchroniser sur les signaux d'horloge que leur transmet l'autocommutateur 1, ces signaux proviennent soit du réseau RNIS 3, si au moins l'un des accès de base TO est actif, soit de l'autocommutateur lui-même, si aucune communication établie par l'intermédiaire de cet autocommutateur ne transite par le réseau RNIS.

L'autocommutateur 1 comporte une logique de commande 4 classiquement organisée autour d'au moins un processeur 5, il dispose d'une base de temps 6, apte à recevoir les signaux d'horloge provenant éventuellement du réseau qui sont recueillis au niveau des accès de base TO.

Cette base de temps 6 reçoit aussi les signaux émanant d'un oscillateur à quartz 7, qui se substituent aux précédents lorsque ces derniers disparaissent.

La base de temps 6 fournit à l'autocommutateur 1 et à l'ensemble de terminaux 2 les signaux de temps nécessaires à leurs échanges entre eux et avec le réseau RNIS.

Les signaux d'horloge obtenus du réseau RNIS sont prioritaires et se substituent à ceux dérivés de l'oscillateur à quartz 7, dès que l'activité d'un des accès de base TO le permet.

La base de temps 6 assure la transmission de divers signaux de temps en particulier une horloge de bit HB et une synchronisation SY aux organes concernés de l'autocommutateur 1, notamment aux circuits d'interface 8 et 9 auxquels sont respectivement reliés les accès de base TO du réseau RNIS et les accès SO pour terminaux de l'autocommutateur privé 1.

Les circuits d'interface 8 affectés aux accès de base TO reçoivent les signaux numériques fournis à l'autocommutateur privé 1 par le réseau RNIS et comportent chacun un dispositif de récupération d'horloge permettant d'obtenir un signal d'horloge récupérée HR à partir des signaux numériques reçus.

Ce dispositif de récupération d'horloge est par exemple un circuit ISAC-S (PEB) 2085 de la société SIEMENS.

Dans une forme de réalisation, "n" circuits d'interface 8 qui desservent chacun un accès de base TO, sont rassemblés en un module 10, par exemple, une carte, et accèdent parallèlement à un premier dispositif de choix d'horloge 11 propre à ce module.

Ce dispositif de choix d'horloge 11 est contrôlé par un microcontrôleur 12 de gestion des modules qui autorise la transmission d'un seul des "n" signaux d'horloge récupérée HR qui sont susceptibles d'être générés dans le module. Le dispositif de récupération d'horloge d'un circuit interface 8 actif d'un module a priorité sur les dispositifs identiques des autres circuits interfaces qui sont activés ultérieurement ; une priorité est donnée par le dispositif 11 en cas d'activation simultanée de deux au moins des circuits interfaces 8 d'une même carte.

Une liaison bus 13 relie le microcontrôleur 12 au dispositif de choix 11 à cet effet, elle dessert également les interfaces 8 et un dispositif de contention 14 pour les divers échanges de signaux nécessaires à leur fonctionnement. Les circuits interfaces 8 qui assurent la récupération des signaux d'horloge, participent également aux échanges de signaux de voix et de données prenant place entre d'une part le réseau RNIS et d'autre part l'autocommutateur privé 1 et les terminaux.

Les dispositifs de contention 14 respectifs des modules 10 d'un autocommutateur privé 1 permettent un second choix entre signaux d'horloge HR provenant de modules différents si cela est nécessaire, c'est-à-dire si les accès de base TO desservis par ces modules 10 sont simultanément actifs.

A cet effet une priorité tournante est successivement accordée à chacun des modules selon un processus qui sera évoqué plus loin.

L'horloge récupérée HR, sélectionnée avec l'aide des dispositifs de choix et de contention, est acheminée vers la base de temps 6 de l'autocommutateur 1 afin d'assurer la mise en phase de cette base de temps par rapport à l'horloge régissant le réseau RNIS, dès que celle-ci parvient à l'autocommutateur par au moins un accès de base TO et ne parvient que par de tels accès susceptibles d'être temporairement désactivés.

Comme déjà indiqué précédemment, la base de temps 6 fournit l'ensemble des signaux de temps nécessaires aux échanges entre les terminaux de l'ensemble 2 et l'autocommutateur 1 et par conséquence entre interfaces 8 et 9 qui participent à ces échanges, étant entendu que les signaux de voix, de données et de signalisation transitent par des liaisons de commutation qui ne sont pas développées ici, car sans rapport direct avec l'invention. Ceci est symbolisé par un bus 15, reliant les interfaces 8 et 9 entre elles, à leurs microcontrôleurs 12 et au processeur 5 de l'unité de commande 4 de l'autocommutateur.

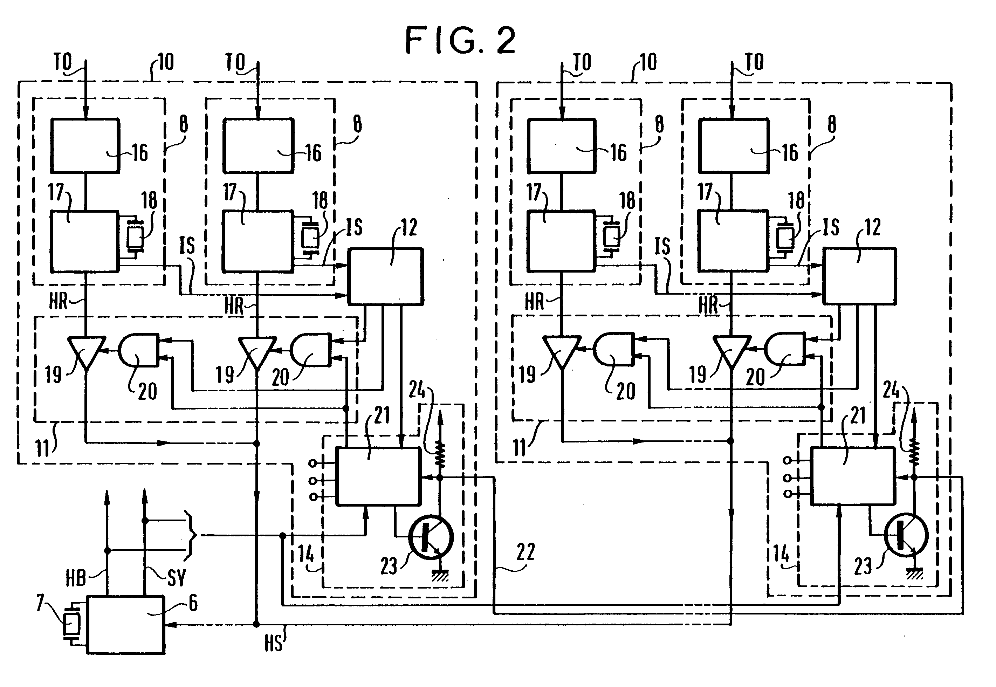

Dans un exemple de réalisation, les interfaces 8 sont constituées par des circuits PEB 2085 de la société SIEMENS et comportent, entre autres, un dispositif de récupération d'horloge 16 et une boucle à verrouillage de phase numérique 17 pilotée par un oscillateur à quartz 18 -figure 2-. Chaque accès de base TO reçoit, lorsqu'il est actif, des signaux provenant du réseau RNIS dans lesquels se trouve incorporé le signal d'horloge de bit dont la fréquence est de 192 kilohertz. Ce signal de bit est extrait par le dispositif de récupération 16 de l'interface 8 qui dessert l'accès de base TO considéré et il est transmis à la boucle à verrouillage de phase 17 pour servir à générer un signal d'horloge HR en phase avec le signal d'horloge de bit reçu. Dans l'exemple de réalisation proposé, le signal d'horloge HR produit à une fréquence de 512 kilohertz.

Comme les accès de base TO desservant un même autocommutateur 1 sont tous susceptibles d'être activés isolément, il est nécessaire de pouvoir traiter les signaux d'horloge de bit, émanant du réseau RNIS, au niveau de chacun d'eux.

Or en raison des disparités au niveau des composants des équipements et des liaisons, les différents accès de base TO reliant un même autocommutateur 1 à un réseau RNIS ne reçoivent pas nécessairement avec une phase identique les signaux d'horloge de bit régissant ce réseau.

Il est donc nécessaire de tenir compte de l'effet potentiel sur la transmission des données des sauts de phase susceptibles de se produire lors du passage du signal d'horloge de bit fourni par un accès de base à celui fourni par un autre, suite par exemple à la désactivation du premier nommé d'entre eux.

Il est également nécessaire de choisir celle des horloges de bit fournies par différents accès de base simultanément actifs, qui sera choisie en cas de désactivation de l'accès qui préalablement fournissait une telle horloge de bit.

A cet effet, les interfaces 8 d'un même module 10 fournissent chacun un signal d'horloge HR en phase sur le signal d'horloge de bit reçu du réseau RNIS au travers de l'accès de base TO associé, chacun de ces signaux HR est appliqué au circuit de choix du module 10. Dans l'exemple de réalisation proposé, chaque boucle de verrouillage de phase 17 d'un module 10 fournit une information de synchronisation IS au microcontrôleur 12 de ce module lorsqu'elle est verrouillée sur l'horloge de bit. Le microcontrôleur 12 choisit au vu des informations reçues des interfaces 8 qu'il supervise celle de ces interfaces dont le signal d'horloge HR sera éventuellement transmis vers la base de temps 6. Le choix s'effectue par exemple selon une priorité tournante où les interfaces 8 sont successivement solicitées ou encore selon une priorité fixe préétablie entre interfaces du même module. Pour cela par exemple, les boucles de verrouillage de phase 17 d'un module 10 ont leurs sorties respectives de signal d'horloge HR, qui sont reliées entre elle via des portes 19, montés en parallèles, dont les entrées de commande sont sélectivement activables par le microcontrôleur 12 du module.

Dans l'exemple de réalisation envisagé, les sorties d'horloge HR des différents modules sont aussi reliées entre elles à une entrée de la base de temps 6, seule l'une d'elles étant autorisée à transmettre ces signaux d'horloge HR vers cette base de temps.

A cet effet, la porte 19 de chaque interface 8 a son entrée de commande contrôlée par le dispositif de contention 14 du module qui le comporte, via une porte 20, de type ET, qui reçoit aussi la commande d'activation émanant du microcontrôleur 12.

Le dispositif de contention 14 d'un module comporte une unité logique 21 qui reçoit d'une part les signaux d'horloge HB et de synchronisation SY fournis par la base de temps 6, d'autre part des informations d'identification et d'état pour pouvoir déclencher l'activation d'une des portes 19 si le module est chargé de fournir ses signaux d'horloge HR à la base de temps.

Les dispositifs de contention 14 des différents modules de l'aucommutateur 1 sont individuellement susceptibles de commander le marquage d'un liaison de prise 22 qui leur est commune et qui traduit la présence d'un signal d'horloge HR émis par l'un de ces modules et en conséquence l'existence d'au moins un accès de base TO activé.

Dans l'exemple de réalisation proposé, un transistor 23, de type NPN, en série avec une résistance 24 entre la masse et un potentiel V dans chaque module 10, permet de mettre la liaison de prise 22 au potentiel de masse sous le contrôle de l'unité logique 21 d'un module, lorsque le microcontrôleur 12 de ce module indique à l'unité logique 21 de son module que l'une au moins des interfaces qu'il supervise fournit un signal d'horloge HR verrouillé en phase sur l'horloge du réseau RNIS.

La logique 21 agit sur la base du transistor 23 du module qui la comporte et elle est reliée à la liaison de prise 22 par exemple au point commun à la résistance 24 et au collecteur du collecteur du transistor 23 associé. Lorsque la liaison 22 est marquée par mise à la masse, via un transistor 23 d'un module, cette mise à la masse est détectée par la logique 21 des autres modules, via la liaison 22 à laquelle elles sont toutes raccordées. Ceci permet d'inhiber, de manière connue en soi, l'activation des amplificateurs 19 contrôlés par toutes les unités logiques 21 autres que celle qui assure le marquage.

Chaque module 21 s'identifie individuellement par une adresse câblée, par exemple en fond de panier lorsque les modules sont constitués par des cartes enfichables. Un comparateur non représenté de chaque unité logique 21 est agencé pour comparer l'adresse câblée fournie à un premier groupe de ses entrées avec une indication qui est fournie à un second groupe d'entrées par un compteur synchronisé par le signal de synchronisation de trame SY et actionné par l'horloge HB de la base de temps. Il est ainsi possible d'affecter une fenêtre de temps à chaque module au cours d'une trame définie par la base de temps 6. La logique 21 d'un module ne permet l'établissement d'un marquage sur la liaison de prise 22 que lors de la fenêtre temporelle attribuée au module qui la comporte, au cours des trames successives définies par la base de temps 6 et uniquement si le microcontrôleur du module signale l'existence d'un signal d'horloge HR verrouillé en phase, en sortie d'une des interfaces 8 du module.

Le marquage de la liaison de prise 22 par l'intermédiaire d'une unité logique 21 d'un module s'accompagne de l'activation d'un amplificateur 19 de ce module, via la porte 20 correspondante qui reçoit d'une part un signal d'activation appliqué par une bascule non figurée de l'unité logique 21 à toutes les portes 20 du module et d'autre part une commande d'activation du microcontrôleur 12 du module, via une seconde bascule non figurée ; cette dernière traduit l'existence d'un signal d'horloge verrouillé en phase, en sortie de l'interface 8 à laquelle est relié l'amplificateur 19 considéré.

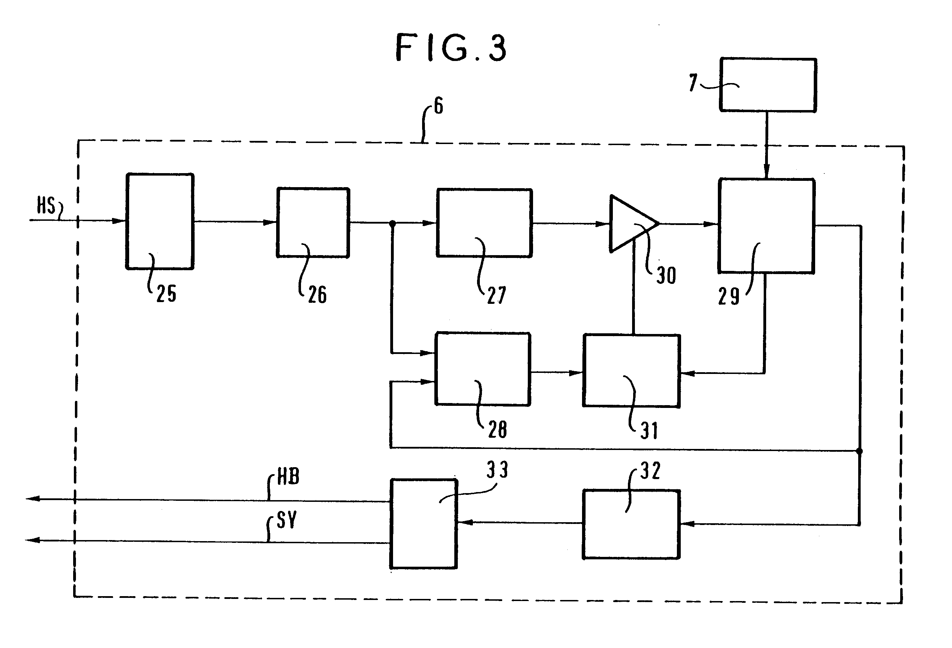

Le signal d'horloge HS sélectionné est envoyé à la base de temps 6 qui est détaillée en liaison avec la figure 3.

Cette base de temps 6 comporte éventuellement un circuit auxiliaire de choix d'horloge et de détection 25 permettant par exemple de choisir les signaux d'horloge HS provenant d'un boîtier, non figuré, contenant l'unité centrale et des modules 8, plutôt que d'au moins un ou plusieurs autres boîtiers auxiliaires contenant d'autres modules 8, le choix étant établi par tout moyen et par exemple par attribution préférentielle fixe.

Le signal d'horloge HS reçu par la base de temps 6 est préférablement abaissé en fréquence par un diviseur 26 asservi en phase ; dans l'exemple choisi la fréquence obtenue par division est de 64 kilohertz, le signal résultant obtenu est transmis en parallèle à un générateur d'impulsion synchrones 27 et à une entrée d'un comparateur de phase 28. Les impulsions synchrones obtenues en sortie du générateur 27 sont appliquées à l'entrée de remise à zéro d'un compteur 29, via une porte 30 dont l'entrée de commande est actionnée par le comparateur de phase 28, via une logique auxiliaire 31.

Le compteur 29 reçoit à son entrée d'horloge les signaux émis par l'oscillateur à quartz 7 qui a par exemple une fréquence de 16,384 MHz, il fournit un signal d'horloge de référence de soixante-quatre kilohertz à une boucle à verrouillage de phase 32 et éventuellement un signal d'indication de perte d'horloge entrante à destination de la logique auxiliaire 31. Le signal d'horloge de référence fourni en sortie du compteur 29 est transmis à une seconde entrée du comparateur 28.

En l'absence de signaux d'horloge transmis au travers des accès de base TO par le réseau RNIS, lorsque ces accès de base sont inactifs, c'est l'oscillateur 7 qui sert de référence pour l'établissement des signaux d'horloge destinés à permettre le fonctionnement de l'autocommutateur 1, ces signaux sont obtenus de manière connue en soi au moyen d'un ensemble 33 de compteurs et registres placé en aval de la boucle de verrouillage de phase 32. Cette dernière est alors contrôlée par l'oscillateur 7 au travers du compteur 29.

Dans une forme préférée de réalisation, l'oscillateur commandé en tension, non représenté, que comporte la boucle à verrouillage de phase 32, a une plage d'accrochage supérieure à 100 ppm pour tenir compte de la tolérance admise en mode libre par le CCITT dans ses recommandations et il est réglé de manière à se positionner dans sa zone médiane de réglage, lorsqu'il reçoit un signal du compteur 29 qui correspond à celui qui est déterminé par l'oscillateur 7.

L'activation d'un premier accès de base TO et la réception des signaux d'horloge provenant du réseau RNIS à travers cet accès de base entraîne la transmission de ces signaux d'horloge à la base de temps 6 et plus spécifiquement en circuit auxiliaire 25 de détection d'horloge et au diviseur 26 de cette dernière.

Le signal obtenu par division, ici par huit, est composé en phase avec le signal de fréquence correspondante que produit le compteur 29 à partir du signal fourni par l'oscillateur 7.

Si le déphasage est inférieur à un angle donné, par exemple de l'ordre de vingt degrés, la logique de commande actionne la porte 30 et les impulsions synchrones produites par le générateur 27 sont appliquées à l'entrée de remise à zéro du compteur 29 dont elles contrôlent donc la sortie. Les signaux de temps produits par l'ensemble 33 à partir du signal de sortie de la boucle à verrouillage de phase 32, sont alors positionnés en fréquence et phase par rapport à l'horloge émanant du réseau RNIS, en raison de l'action de la boucle de phase, et cela tant que l'accès de base TO transmettant les signaux d'horloge est maintenu actif.

Si cet accès de base devient inactif et ne transmet plus de signaux d'horloge à la base de temps 6, le compteur 29 ne reçoit plus que les signaux d'horloge de l'oscillateur 7 qui prend le relais. La porte 30 est bloquée par la logique auxiliaire 31 informée par le compteur 29. La boucle à verrouillage de phase 32 compense l'éventuel déphasage apparaissant au moment de la disparition de l'horloge du réseau RNIS, en modifiant progressivement le rapport cyclique du signal qu'elle produit, soit par allongement soit par raccourcissement suivant le rattrapage à effectuer.

Si un second accès de base TO était simultanément actif avec celui qui transmettait le signal d'horloge RNIS et qui ne l'a plus transmis, il prend à son tour la charge de contrôler la base de temps par l'intermédiaire des signaux d'horloge d'origine RNIS qu'il transmet.

Cette prise en charge s'effectue alors de la manière évoquée plus haut dans le cas d'activation d'un premier accès de base TO après une période où au moins aucun d'entre eux n'a été actif.

## Revendications

1. Agencement de synchronisation pour autocommutateur numérique (1), de type privé comportant une logique de commande (4) et des interfaces spécialisées (9, 8) par l'intermédiaire desquelles cet autocommutateur se raccorde d'une part à une pluralité de terminaux d'abonné (2), d'autre part à un réseau de télécommunication (3), de type numérique à intégration de services, les dites interfaces spécialisées étant respectivement reliées les unes (8) au réseau par des accès de base (TO) au travers desquels transitent des signaux numériques d'information et/ou de signalisation, transmis bidirectionnellement entre l'autocommutateur (1) et le réseau de télécommunication (3), et des signaux d'horloge transmis du réseau vers l'autocommutateur et les terminaux, les autres (9) aux terminaux par des accès pour terminaux (SO) par l'intermédiaire desquels transitent des signaux numériques d' information et/ou de signalisation transmis bidirectionnellement entre l'autocommutateur et les terminaux ainsi que des signaux d'horloge transmis vers les terminaux, ledit autocommutateur comportant de plus une base de temps (6) associant en particulier un oscillateur local à fréquence fixe (7) à une boucle à verrouillage de phase (32) pour être apte à fournir les signaux d'horloge nécessaires à cet autocommutateur (1) et aux terminaux raccordés à lui, caractérisé en ce qu'il comporte des moyens de commutation d'horloge (11, 14) aptes à imposer, à la boucle de verrouillage de phase (32) de la base de temps (6) d'autocommutateur, les premiers signaux d'horloge provenant du réseau (3) par l'intermédiaire d'un accès de base (TO) actif et de l'interface (8) associée, dès mise en phase approchée desdits premiers signaux d'horloge vis-à-vis des signaux d'horloge correspondants fournis par la base de temps (6) en l'absence de ces dits premiers signaux d'horloge et cela pour une durée égale à la persistence de la fourniture de ces premiers signaux d'horloge par l'accès de base (TO) et l'interface (8) qui les transmettent.

2. Agencement de synchronisation selon la revendication 1, caractérisé en ce qu'il comporte une base de temps (6) dont l'oscillateur local fixe (7) est relié à l'entrée de référence de la boucle à verrouillage de phase (32) de cette base de temps, par l'intermédiaire d'un compteur (29) à l'entrée d'horloge duquel il est relié, ce compteur ayant une entrée de remise à zéro reliée en sortie d'un générateur d'impulsions synchrones (27) recevant après division lesdits premiers signaux d'horloge émanant du réseau de télécommunication.

3. Agencement de synchronisation selon la revendication 2, caractérisé en ce qu'il comporte une logique auxiliaire (31) relié en sortie d'un comparateur de phase (28) dont une entrée reçoit après division lesdits premiers signaux d'horloge émanant du réseau de télécommunication et dont l'autre entrée reçoit les signaux d'horloge fournis à la boucle à verrouillage de phase (32) par le compteur (29) de manière à n'activer une porte (30) insérée entre le générateur d'impulsions synchrones (27) et le compteur (29) que pour un déphasage limité prédéterminé entre les signaux d'horloge appliqués aux entrées du comparateur.

4. Agencement de synchronisation selon la revendication 1, caractérisé en ce que les moyens de commutation d'horloge comportent au moins un dispositif de choix d'horloge (11) permettant une interconnexion sélective d'une des interfaces (8) reliées à un accès de base (TO) actif à la base de temps (6) de l'autocommutateur pour la transmission des signaux d'horloge émanant du réseau (3) à cette base de temps durant la période de temps pour lequel ledit accès de base reste actif, après interconnexion, ainsi qu'au moins un dispositif de contention (14) interdisant l'interconnexion des autres interfaces (8) d'accès de base actifs à la base de temps de l'autocommutateur tant que l'interface (8) déjà interconnectée transmet les signaux d'horloge émanant du réseau (3).

5. Agencement de synchronisation selon la revendication 4 caractérisé en ce que les interfaces (8) d'accès de base (TO) de l'autocommutateur numérique sont regroupées par modules (10) de "n" interfaces d'accès de base, et en ce que l'autocommutateur numérique comporte "n" dispositifs de choix d'horloge (11) affectés chacun à un module, chaque dispositif comportant une porte (19), par interface (8) d'accès de base (TO), insérée entre ladite interface et la base de temps (6) de l'autocommutateur et contrôlée conjointement par un microprocesseur (12) de gestion de module et par un ensemble de dispositif de contention (14) commun à au moins plusieurs modules.

6. Agencement de synchronisation selon la revendication 5, caractérisé en ce que chaque module (10) comporte un dispositif de contention (14) relié à une liaison de prise (22) qu'il partage avec les dispositifs de contention d'au moins certains autres modules, qu'il est apte à lire pour détecter un marquage temporairement appliqué à cette liaison de prise par un autre dispositif de contention et qu'il est apte à marquer lui-même en l'absence de marquage appliqué par d'autres.

## Claims

1. A synchronizing system for a private digital exchange (1), the exchange comprising a controlling logic unit (4) and specialized interfaces (9, 8) via which the exchange is connected firstly to a plurality of subscriber terminals (2), and secondly to a telecommunications network (3) of the integrated services digital type, first ones (8) of said specialized interfaces being connected to the network via base accesses (TO) through which digital information and/or signalling signals transmit in both directions between the exchange (1) and the telecommunications network (3 ), together with clock signals transmitted from the network to the exchange and the terminals, second specialized interfaces (9) being connected to the terminals by terminal accesses (SO) via which digital information and/or signalling signals are transmitted in both directions between the exchange and the terminals together with clock signals which are transmitted to the terminals, said exchange also including a time base (6) associating, in particular, a local fixed-frequency oscillator (7) with a phase locked loop (32) so as to be suitable for providing the clock signals required for the exchange (1) and for the terminals connected thereto, the system being characterized in that it comprises clock switching means (11, 14) suitable for imposing the first clock signals coming from the network (3) via an active (TO) base access and the associated interface (8) on the phase locked loop (32) of the exchange's time base (6) as soon as said first clock signals become close in phase to the corresponding clock signals provided by the time base (6) when said first clock signals are absent, and that this continues for as long as said first clock signals continue to be provided by the base access (TO) and the interface (8) which transmits them.

2. A synchronizing system according to claim 1, characterized in that it comprises a time base (6) whose fixed local oscillator (7) is connected to the reference input of the phase locked loop (32) of said time base via a counter (29) to whose clock input it is connected, said counter having a reset-to-zero input connected to the output from a synchronous pulse generator (27) which receives a divided down version of said first clock signals coming from the telecommunications network.

3. A synchronizing system according to claim 2, characterized in that it includes an auxiliary logic unit (31) connected to the output of a phase comparator (28) having one input receiving the divided down version of said first clock signals coming from the telecommunications network and whose other input receives the clock signals provided to the phase locked loop (22) by the counter (29) so as to ensure that a gate (30) inserted between the synchronous pulse generator (27) and the counter (29) is activated only when the phase difference between the clock signals applied to the inputs of the comparator is less than a predetermined limited phase difference.

4. A synchronizing system according to claim 1, characterized in that the clock switching means include at least one clock select circuit (11) for selectively interconnecting one of the interfaces (8) connected to an active base access (TO) and the time base (6) of the exchange for transmitting the clock signals coming from the network (3) to said time base during the period of time for which said base access remains active after interconnection has taken place, together with at least one conflict handler (14) preventing other interfaces (8) having active base accesses being interconnected to the time base of the exchange so long as the already-interconnected interface (8) continues to transmit clock signals coming from the network (3).

5. A synchronizing system according to claim 4, characterized in that the interfaces (8) having base accesses (TO) of the digital exchange are collected together in modules (10) each having n base access interfaces, and in that the digital exchange includes n clock select circuits (11) each attributed to one of the modules, each clock select circuit comprising one gate (19) per interface (8) having base access (TO), the gate being inserted between said interface and the time base (6) of the exchange and being controlled together with the other gates by a module-controlling microprocessor (12) and by a set of conflict handlers (14) common to a plurality of modules.

6. A synchronizing system according to claim 5, characterized in that each module (10) includes a conflict handler (14) connected to a busy link (22) which it shares with the conflict handlers of at least some of the other modules, and is capable of reading the busy link in order to detect marking temporarily applied thereto by another conflict handler, and that it is suitable for marking the link itself in the absence of marking applied by the other conflict handlers.

## Patentansprüche

1. Synchronisationsschaltung für eine digitale Nebenstellen-Vermittlung (1) mit einer Steuerlogik (4) und spezialisierten Schnittstellen (9, 8), über die diese Vermittlung einerseits an eine Vielzahl von Teilnehmerendgeräten (2) und andererseits an ein dienstintegriertes digitales Fernmeldenetz (3) angeschlossen ist, wobei erste spezialisierte Schnittstellen (8) mit dem Netz über Basisanschlüsse (TO) verbunden sind, durch die digitale Informationssignale und/oder Signalisationssignale, die bidirektional zwischen der Vermittlung (1) und dem Fernmeldenetz (3) übertragen werden, sowie Taktsignale laufen, die vom Netz an die Vermittlung und an die Endgeräte übermittelt werden, und wobei die anderen spezialisierten Schnittstellen (9) mit den Endgeräten über Anschlüsse (SO) für Endgeräte verbunden sind, über die digitale Informationssignale und/oder Signalisationssignale bidirektional zwischen der Vermittlung und den Endgeräten und Taktsignale in Richtung auf die Endgeräte übermittelt werden, wobei die Vermittlung weiter eine Zeitbasis (6) aufweist, die insbesondere einen örtlichen Festfrequenzoszillator (7) einer Phasenverriegelungsschleife (32) zuordnet, damit sie die notwendigen Taktsignale an die Vermittlung (1) und an die an sie angeschlossenen Endgeräte liefern kann, dadurch gekennzeichnet, daß die Synchronisationsschaltung Taktschalteinrichtungen (11, 14) aufweist, die der Phasenverriegelungsschleife (32) der Zeitbasis (6) der Vermittlung die ersten Taktsignale auftakten kann, die vom Netz (3) über einen aktiven Basisanschluß (TO) und die zugeordnete Schnittstelle (8) kommen, sobald die Phasenannaherung der ersten Taktsignale an die entsprechenden Taktsignale erfolgt ist, die beim Fehlen dieser ersten Taktsignale von der Zeitbasis (6) und während einer Dauer geliefert werden, die der Dauer der Lieferung der ersten Taktsignale durch den Basisanschluß (TO) und die Schnittstelle (8), welche die Signale übertragen, entspricht.

2. Synchronisationsschaltung nach Anspruch 1, dadurch gekennzeichnet, daß sie eine Zeitbasis (6) aufweist, deren örtlicher Festoszillator (7) an den Bezugseingang der Phasenverriegelungsschleife (32) dieser Zeitbasis über einen Zähler (29) angeschlossen ist, an dessen Takteingang der Oszillator angeschlossen ist und der mit einem Nullrückstelleingang an den Ausgang eines Synchron-Impulsgenerators (27) angeschlossen ist, der nach der Teilung die vom Fernmeldenetz kommenden ersten Taktsignale empfängt.

3. Synchronisationsschaltung nach Anspruch 2, dadurch gekennzeichnet, daß sie eine Hilfslogik (31) aufweist, die an den Ausgang eines Phasenkomparators (28) angeschlossen ist, dessen einer Eingang die vom Fernmeldenetz kommenden ersten Taktsignale nach deren Teilung und am anderen Eingang die vom Zähler (29) an die Phasenverriegelungsschleife (32) gelieferten Taktsignale empfängt, derart, daß ein zwischen den Synchron-Impulsgenerator (27) und den Zähler (29) eingefügtes Tor (30) nur bei einer vorbestimmten, begrenzten Phasenverschiebung zwischen den an die Eingänge des Komparators angelegten Taktsignalen aktiviert wird.

4. Synchronisationsschaltung nach Anspruch 1, dadurch gekennzeichnet, daß die Taktschaltmittel mindestens eine Taktwahleinrichtung (11) aufweisen, die eine selektive Anschlußverbindung zwischen einer der mit einem aktiven Basisanschluß (TO) verbundenen Schnittstellen (8) und der Zeitbasis (6) der Vermittlung, zur Übertragung der vom Netz (3) kommenden Taktsignale an diese Zeitbasis während der Zeitdauer ermöglicht, in der der Basisanschluß nach Herstellen der Anschlußverbindung aktiv bleibt, und daß die Schaltung mindestens eine Konfliktlösungseinrichtung (14) aufweist, die den Anschluß der anderen Schnittstellen (8) der aktiven Basisanschlüsse an die Zeitbasis der Vermittlung so lange unterbindet, wie die bereits angeschlossene Schnittstelle (8) die vom Netz (3) kommenden Taktsignale überträgt.

5. Synchronisationsschaltung nach Anspruch 4, dadurch gekennzeichnet, daß die Basisanschluß-Schnittstellen (8) der digitalen Vermittlung in Module (10) von "n" Basisanschlußschnittstellen gruppiert sind und daß die digitale Vermittlung "n" Taktwähleinrichtungen (11) aufweist, die je einem Modul zugeteilt sind, wobei jede Schaltung je Basisanschluß-Schnittstelle (8) ein Tor (19) aufweist, das zwischen diese Schnittstelle und die Zeitbasis (6) der Vermittlung eingefügt ist und gemeinsam von einem Modulverwaltungsmikroprozessor (12) und einer Gruppe von Konfliktlösungseinrichtungen (14) gesteuert wird, die mindestens mehreren Modulen gemeinsam ist.

6. Synchronisationsschaltung nach Anspruch 5, dadurch gekennzeichnet, daß jeder Modul (10) eine Konfliktlösungseinrichtung (14) aufweist, die an eine Belegungsleitung (22) angeschlossen ist, die sie mit den Konfliktlösungseinrichtungen mindestens bestimmter anderer Module teilt, und die er lesen kann, um eine vorübergehend an die Belegungsleitung durch eine andere Konfliktlösungseinrichtung angelegte Markierung zu erfassen und die er bei Fehlen einer durch andere Einrichtungen angelegten Markierung selber markieren kann.
